**Europäisches Patentamt**

(19) **European Patent Office**

**Office européen des brevets**

(11) Publication number: **0 127 563**
**B1**

(12) **EUROPEAN PATENT SPECIFICATION**

(45) Date of publication of patent specification: **08.08.90**

(21) Application number: **84630071.3**

(22) Date of filing: **27.04.84**

(51) Int. Cl.⁵: **F 02 C 7/06, F 01 D 25/12, F 01 D 25/16, F 04 D 29/12**

(54) Bearing compartment protection system.

(30) Priority: **31.05.83 US 499634**

(43) Date of publication of application:
**05.12.84 Bulletin 84/49**

(45) Publication of the grant of the patent:
**08.08.90 Bulletin 90/32**

(84) Designated Contracting States:
**DE FR GB**

(56) References cited:
**FR-A-1 484 834**
**FR-A-2 205 627**
**US-A-2 992 842**
**US-A-4 337 983**
**US-A-4 385 788**

(73) Proprietor: **UNITED TECHNOLOGIES CORPORATION**
**United Technologies Building 1, Financial Plaza**
**Hartford, CT 06101 (US)**

(72) Inventor: **Putman, Robert Louis**
**33 Mt. Sumner Drive**
**Bolton, CT 06040 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to gas turbine power plants for powering aircraft and particularly to means for buffering the bearings mounted in proximity to the hot section of the power plant.

In recent years, the industry has been undertaking an intensive effort in designing, developing and manufacturing power plants that exhibited a high thrust specific fuel consumption (TSFC). To this end it is desirous to operate the engine during at least a portion of its operating envelope at a higher temperature than has heretofore been achieved. One of the consequences of these "hotter" engines is that the bearings supporting the rotating machinery is disposed in a hotter environment than similar sections in other engines have heretofore encountered. This is particularly true in engines that locate the bearings in the hottest section of the engine, namely the combustion section.

While buffer zones and insulation means have been employed heretofore, the typical method of such systems has been to continuously flow cooler air at a relatively low pressure into a cavity surrounding the bearing or in close proximity thereto and then discharge the air after it has dissipated the heat in the surrounding environment. Obviously, such a system has a twofold disadvantage, one being that it requires a substantial amount of air for rejecting the heat associated with the bearing and secondly, it discharges the now heated air overboard and/or to the lower energy turbine stages. The consequence of such systems is that they result in a penalty to the performance of the engine inasmuch as this routed air bypasses the high pressure turbine.

Reference is made to FR—A—2 205 627 which discloses a gas turbine power plant according to the precharacterizing portion of independent claim 1. In FR—A—2 205 627 the buffer air is also cooled air of higher pressure than the pressure of the environment of the bearing compartment housing but as the air after passage through the interior of the bearing compartment is discharged overboard substantial amounts of air are needed thereby affecting the performance of the engine.

Reference is also made to FR—A—1 484 834 wherein it is stated that especially labyrinth seals require pressurization and that this may also be necessary for carbon seals, but the concept of FR—A—1 484 834 is similar to FR—A—2 205 627 in that all of high pressure cold buffer air is continuously discharged overboard.

The object of the invention is to provide means for buffering the bearing compartment of a gas turbine power plant so as to insulate this compartment from the hotter environment in close proximity thereto to minimize the likelihood of inadvertent fires in the bearing area and without adversely affecting engine performance.

In accordance with the invention this is achieved by the features of the characterizing portion of independent claim 1.

Other features and advantages will be apparent from the description of the accompanying drawings which illustrate an embodiment of the invention.

In the drawings:

Fig. 1 is a schematic and perspective view of a gas turbine engine with the heat exchanger utilized to cool the compressor air prior to being returned as the buffer air,

Fig. 2 is a fragmentary view partly in section and partly in schematic showing a first embodiment of this invention, and

Fig. 3 is a fragmentary view partly in section and partly in schematic showing another embodiment of this invention.

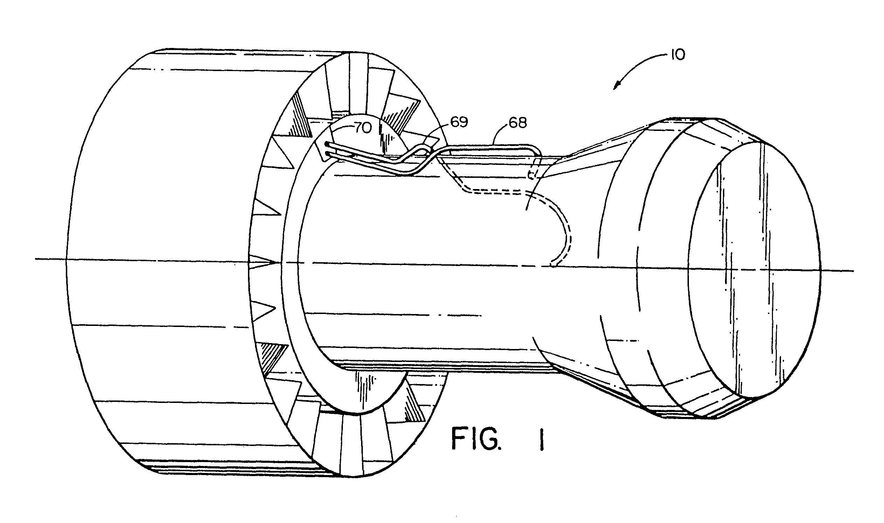

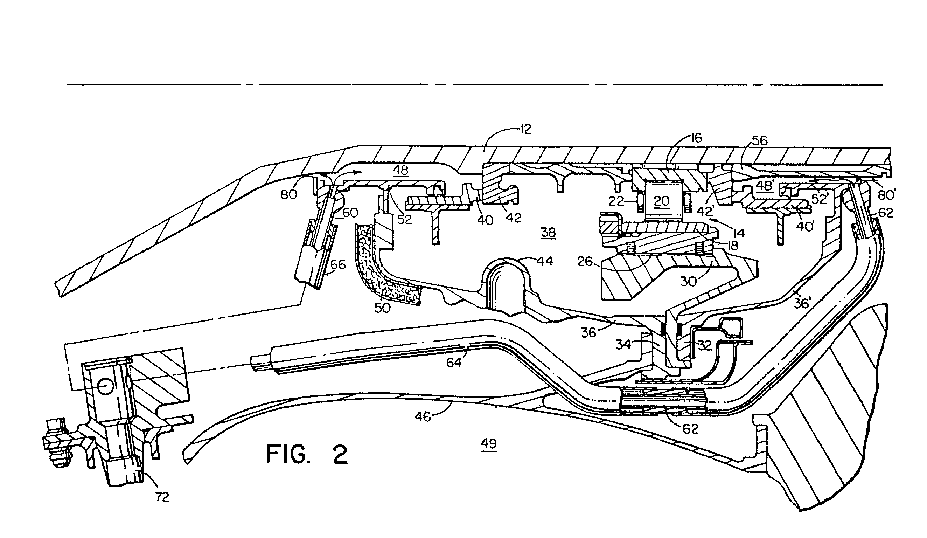

The invention can best be understood by referring to Figs. 1 and 2, showing a typical fan-jet engine generally indicated by reference numeral 10, having a fan section, compressor section, combustor section, turbine section and exhaust section. For the sake of simplicity and convenience, the details of a suitable gas turbine engine is omitted herefrom but reference should be made to the JT 9D engine manufactured by Pratt & Whitney of United Technologies Corporation, the assignee of this patent application.

Suffice it to say that the power plant comprises a twin spool having axial flow compressor and turbine stages, where each set of stages of the compressor and turbine are interconnected by a shaft. The burner section is disposed between the compressor and turbine sections for developing sufficient energy to power the compressor and develop thrust for application. As noted in more detail in Fig. 2, the high pressure spool or gas generator (not shown) consists of shaft 12 suitably supported by roller bearings generally indicated by reference numeral 14. These bearings are well known and consists of an inner ring 16 mounted adjacent shaft 12 an outer ring 18, a plurality of rollers 20 sandwiched therebetween cage 22 and, being surrounded by fluid damper 26. The damper and bearing are, in turn, supported and grounded to the annular support member 30 which is supported between flanges 32 and 34 of the bearing case 36. Bearing case 36 encapsulates the bearing 14. For more details of a bearing and fluid damper construction reference should be made to US—A—4,337,983 and US—A—4,385,788.

As is apparent from the foregoing the bearing is encapsulated in the bearing compartment 38 defined by housing 36 surrounding the shaft 12. The ends of the compartment 38 is sealed by suitable carbon seals 40 and 40' which are spring loaded (not shown) against the face of the seal plates 42 and 42' respectively. The construction of the carbon seals are well known and an example of a suitable construction is shown in US—A—2,992,842.

As is well known, the cavity 38 is continuously subjected to the flow of oil which serves to lubricate and cool the bearings which oil is returned through the pump return line 44 mounted on the bottom of housing 36.

In this installation the bearing housing is supported to the diffuser case partially shown as reference numeral 46 which surrounds the burner liner (not shown) and defines therewith a cavity 49 that surround and shrouds the burner liner. Since the bearing compartment is radially disposed relative to the combustor and typically is exposed to the already heated compressor discharge air surrounding the bearing compartment, under certain operating conditions this location of the engine has the propensity of becoming extremely hot. This is particularly true when some of that air is utilized to pressure the bearing compartment.

One method of insulating the bearing cavity 38 from this excessive heat is by wrapping an insulating blanket 50 of suitable material (partially shown) around the housing 36.

In addition thereto or as an alternate to the insulation system a buffer zone is disposed at the inside diameter of the carbon seals. This buffer zone is supplied with cool, high pressure air bled from the compressor. The temperature of this air is cooler and at a higher pressure than the ambient air surrounding the bearing compartment. Consequently, the hotter ambient air is prevented from entering into the bearing compartment during normal conditions as well as during a failure of the seal, save for some quantity that might mix with the buffer air. In the embodiment shown in Fig. 2, the cooler pressurized air is introduced at the inner diameter of the carbon seal in the annulus 48 and 48' by pipes 60 and 60' to fill the spaces between the shaft 12, seal support structure 52 up to the seal plate 42 on the left hand side of the bearing 14 and between the sleeve 56, seal support 52' up to the seal plate 42', on the right hand side of bearing 14. While only a single feed line is shown on either side of the bearing, each side may carry more than one pipe, (two pipes spaced 180° apart are contemplated in the system).

Pipes 60 and 62 are concentrically mounted in an outer tube 64 and 66 respectively which serves to insulate the inner pipe and maintain the air flowing to the buffer zone at a proper temperature level. The cooler pressurized air, as can be seen from Fig. 1, is bled from a suitable station in the compressor section, routed outside of the engine via line 68, through the fan heat exchanger 70 and returned internally via line 69 to the pipes 60 and 62 through manifold 72, (Fig. 2).

By utilizing the high pressure air, for example, the air at the discharge end of the compressor, and then cooling that air prior to being admitted into the buffer zone, the system is satisfied with a minimal amount of air. Sealed gaps 80 and 80' are provided between each buffer zone 48 and 48' and the exterior of the bearing compartment. Accordingly, the amount of compressor bleed air that is necessary for a suitable buffer zone is only that amount that is necessary to satisfy the carbon seal leakage requirements and the amount normally leaking through the sealed gaps 80 and 80'. Sufficient buffer air is available to prevent compartment oil fire in the event of carbon seal failure.

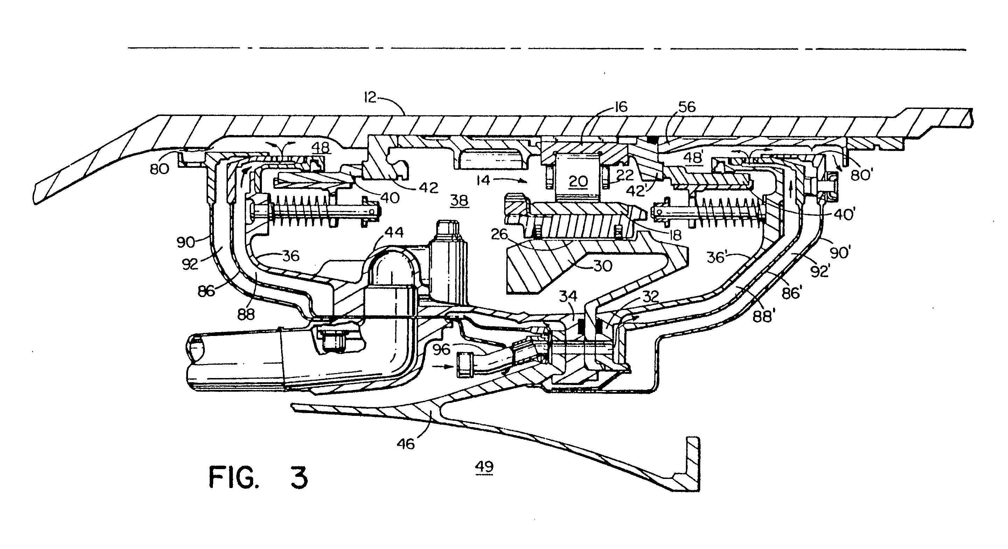

Fig. 3 exemplifies another embodiment of this invention and like-reference numerals refer to like parts. In this embodiment the encapsulated bearing compartment is enclosed on virtually both the left and right hand sides with sheet metal sheaths 86 and 86' spaced therefrom to define annular chambers 88 and 88'. A second left and right hand side sheath 90 and 90' encapsulate the entire unit and is spaced from the inner sheath 86 and 86' to define annular 92 and 92'. The outer annular spaces 92 and 92' are dead ended and provide a dead air space that serves as an insulating blanket for the bearing compartment. This minimizes heat transfer from the hotter air surrounding the compartment to the oil in the bearing compartment.

As was the case of the system in Fig. 2, the system in Fig. 3 receives the higher pressure, cooler air from the heat exchanger and is fed into conduit 96 that serves as a manifold to feed the annular spaces 88 and 88' which in turn feeds the buffer zones 48 and 48'. Also, like the system in Fig. 2, the buffer zones are open-ended and do not require closely held labyrinth seals to contain the buffer air and prevent hot environmental air pollution in close proximity of the carbon seals.

In addition to the advantage of using a small amount of bleed air, which contrasts from heretofore buffer systems that continuously feed cooler air (not pressurized) and relies on the quantity flowing over the bearing for maintaining the cooling and buffering effort, the system of the invention affords these other advantages although not limited thereto.

It reduces the potential for bearing compartment fires by reducing the carbon seal leakage air temperature by 220°C to 280°C (400° to 500°F).

It provides cold air at high pressures to buffer the compartment; the buffer air temperature is colder for a given pressure level than air directly drawn off the compressor system.

It increases the compartment environmental pressure and temperature level at which one can safely operate the bearing compartment.

By using a high pressure source and metering the flow, normal small variations in buffer cavity pressures produce insignificant variations in buffer flow.

**Claims**

1. A gas turbine power plant comprising a compressor shaft (12), a bearing (14) supporting said shaft (12) and encapsulated in a housing (36) defining a bearing compartment (38) having oil contained therein, said housing (36) surrounding said shaft (12) and having seal means (40, 40') between the housing (36) and the shaft (12) to prevent oil from escaping out of the compartment (38), the housing (36) being subjected to a hotter environment than the temperature of the oil within the housing (36), means for defining a buffer zone (48, 48') surrounding said shaft (12) adjacent the seal means (40, 40'), sealed gaps (80, 80') between said buffer zone (48, 48') and said hotter environment, means for supplying air to said buffer zone (48, 48') at a pressure higher than the pressure of the environment surrounding the bearing compartment housing (36), and means for cooling said higher pressure air prior to being admitted into said buffer zone (48, 48'),

characterized in that said seal means (40, 40') comprises carbon seal means and the buffer zone (48, 48') is disposed at the inside diameter of the carbon seal means (40, 40'), said cooled higher pressure air from said buffer zone (48, 48') flowing into said compartment (38) in the event of carbon seal means failure to prevent compartment oil fire.

2. Gas turbine power plant according to claim 1, characterized in that said higher pressure air is bled from a station in the engine compressor whose pressure is higher than the pressure of the environment surrounding the bearing compartment housing (36) and is cooled externally of the power plant.

## Patentansprüche

1. Gasturbinentriebwerk mit einer Verdichterwelle (12), einem Lager (14), welches die Welle (12) trägt und in ein Gehäuse (36) eingekapselt ist, das eine Lagerkammer (38) bildet, in welcher Öl enthalten ist, wobei das Gehäuse (36) die Welle (12) umgibt und eine Dichteinrichtung (40, 40') zwischen dem Gehäuse (36) und der Welle (12) hat, um das Entweichen von Öl aus der Kammer (38) zu verhindern, wobei das Gehäuse (36) einer Umgebung ausgesetzt ist, die heißer ist als die Temperatur des Öls innerhalb des Gehäuses (36), einer Einrichtung zum Bilden einer Pufferzone (48, 48'), welche die Welle (12) an der Dichteinrichtung (40, 40') umgibt, abgedichteten Spalten (80, 80') zwischen der Pufferzone (48, 48') und der heißeren Umgebung, einer Einrichtung zum Versorgen der Pufferzone (48, 48') mit Luft, die einen Druck hat, der höher ist als der Druck der Umgebung, welche das Lagerkammergehäuse (36) umgibt, und einer Einrichtung zum Kühlen der Luft höheren Druckes, bevor diese in die Pufferzone (48, 48') eingeleitet wird, dadurch gekennzeichnet, daß die Dichteinrichtung (40, 40') eine Kohledichteinrichtung aufweist und daß die Pufferzone (48, 48') an dem Innenumfang deer Kohledichteinrichtung (40, 40') angeordnet ist, wobei die gekühlte Luft höheren Druckes aus der Pufferzone (48, 48') bei einem Versagen der Kohledichteinrichtung in die Kammer (38) strömt, um einen Kammerölbrand zu verhindern.

2. Gasturbinentriebwerk nach Anspruch 1, dadurch gekennzeichnet, daß die Luft höheren Druckes an einer Stelle in dem Triebwerksverdichter, deren Druck höher als der Druck der Umgebung ist, welche das Lagerkammergehäuse (36) umgibt, abgezapft und außerhalb des Triebwerks gekühlt wird.

## Revendications

1. Turbomoteur comprenant un arbre de compresseur (12) un palier (14) supportant cet arbre (12) et enfermé dans un carter (36) définissant un compartiment de palier (38) contenant de l'huile, ce carter (36) entourant l'arbre (12) et comportant des moyens d'étanchéité (40, 40'), entre le carter (36) et l'arbre (12), pour empêcher que l'huile ne s'échappe hors du compartiment (38), le carter (36) étant soumis à un environnement plus chaud que la température de l'huile se trouvant dans le carter (36), des moyens pour définir une zone tampon (48, 48') entourant l'arbre (12), adjacente aux moyens d'étanchéité (40, 40'), des intervalles de fermeture (80, 80') entre la zone tampon (48, 48') et l'environnement plus chaud, des moyens pour fournir de l'air à la zone tampon (48, 48') à une pression supérieure à la pression de l'environnement entourant le carter (36) du compartiment du palier, et des moyens pour refroidir cet air à presson plus élevée avanat qu'il ne soit admis dans la zone tampon (48, 48'), caractérisé en ce que les moyens d'étanchéité (40, 40') comprennent des organes d'étanchéité en carbone et la zone tampon (48, 48') est disposée à l'endroit du diamètre interne des organes d'étanchéité en carbone (40, 40'), l'air refroidi à plus haute pression provenanat de la zone tampon (48, 48') s'écoulant vers et dans le compartiment (38) dans le cas d'une défaillance des organes d'étanchéité en carbone, afin d'empêcher l'inflammation de l'huile dans le compartiment.

2. Turbomoteur suivant la revendication 1 caractérisé en ce que l'air à plus haute pression est soutiré à partir d'un endroit, dans le compresseur du moteur, où la pression est plus élevée que la pression de l'environnement entourant le carter (36) du compartiment du palier, et il est refroidi à l'extérieur du moteur.

FIG. I

FIG. 2

FIG. 3